Europäisches Patentamt

European Patent Office

Office européen des brevets

(19)

(11) Veröffentlichungsnummer: **0 306 685 B1**

# (12) EUROPÄISCHE PATENTSCHRIFT

(45) Veröffentlichungstag der Patentschrift: **16.10.91**

(51) Int. Cl.⁵: **A61C 8/00**

(21) Anmeldenummer: **88112095.0**

(22) Anmeldetag: **27.07.88**

(54) **Schraubenimplantat.**

(30) Priorität: **11.08.87 DE 3726616**

(43) Veröffentlichungstag der Anmeldung:
**15.03.89 Patentblatt 89/11**

(45) Bekanntmachung des Hinweises auf die
Patenterteilung:
**16.10.91 Patentblatt 91/42**

(84) Benannte Vertragsstaaten:
**AT BE CH DE ES FR GB GR IT LI LU NL SE**

(56) Entgegenhaltungen:
**DE-A- 1 961 531
DE-A- 2 413 883
US-A- 4 362 511**

**DIE QUINTESSENZ Heft 11, November 1884,
Berlin, Seiten 2031-2041; PH.D. LEDERMANN:
"Das TPS-Schraubenimplantat nach siebenjähriger Anwendung" * Seite 2031***

(73) Patentinhaber: **Friedrichsfeld Aktiengesellschaft Keramik- und Kunststoffwerke
Steinzeugstrasse 50
W-6800 Mannheim 71(DE)**

(72) Erfinder: **Ledermann, Philippe, Dr. Dr.
Oberstrasse 28
CH-3360 Herzogenbuchsee(CH)**

(74) Vertreter: **Klose, Hans, Dipl.-Phys. et al
Kurfürstenstrasse 32
W-6700 Ludwigshafen(DE)**

## Beschreibung

Die Erfindung bezieht sich auf ein Schraubenimplantat gemäß den im Oberbegriff des Patentanspruches 1 angegebenen Merkmalen.

Aus der DE-A-1 961 531 ist ein derartiges Schraubenimplantat bekannt, dessen konischer Kopf praktisch unmittelbar an den in den Kiefer einschraubbaren Gewindeteil anschließt. Die zervikale Endfläche der Kappe weist eine ringförmige Schneide auf, welche zwecks Abdichtung in die Oberfläche des Kieferknochens einschneidet. Die Kappe erstreckt sich nach der Inkorporation somit vom Knochen durch die Schleimhaut hindurch. Die zur Festlegung der Kappe auf dem Gewindebolzen vorgesehene Schraube enthält in ihrem Schraubenkopf ein Gewinde, um die Befestigung einer Suprastruktur oder eines Kronenaufbaus zu ermöglichen. Unmittelbar nach der Implantation des Gewindebolzens wird zunächst ein zusätzlicher Ring auf dem konischen Kopf für die Einheilungsphase befestigt. Nach der Einheilung wird der Ring ersetzt durch die eingangs genannte Kappe, welche mittels der okklusalen Schraube in dem Gewindeteil befestigt wird, wobei nachfolgend in das den Schraubenkopf durchdringende Gewinde eine weitere Schraube zur Befestigung der Suprastruktur eingeschraubt wird. Es handelt sich hierbei um ein zweiphasiges Implantat, bei welchem die Kappe im Bereich der Schleimhaut angeordnet ist. Zur Abdichtung gegenüber dem Kieferknochen weist die Kappe eine ringförmige Schneide auf, um das Eindringen insbesondere von Bakterien zu vermeiden. Der konische Kopf schließt an den Gewindeteil an, ohne daß dabei ein das Anwachsen der Schleimhaut begünstigender Hals vorhanden ist, zumal das zervikale Ende sowohl des Kopfes als auch der Kappe unmittelbar am Kieferknochen anliegen. Es hat sich gezeigt, daß durch Druckbelastungen im Bereich der Anlage des konischen Kopfes sowie des zervikalen Endes der Kappe mit der ringförmigen Schneide im Kieferknochen Rückbildungen des Knochengewebes sich ergeben können, wobei auftretende Spalte ein nicht unerhebliches Risiko zur Ausbildung von infektiösen Herden darstellen.

Aus der DE-OS 24 13 883 ist ein enossales Implantat zur Befestigung von festsitzendem Zahnersatz bekannt, der einen Pfosten aus zwei Teilen aufweist. Der eine Teil wird in den Kiefer implantiert und enthält eine sich praktisch über die gesamte Länge erstreckende Sackbohrung mit Innengewinde. Der zur Befestigung eines Zahnersatzes dienende andere Teil weist einen Stift mit einem Außengewinde auf, der in das genannte Innengewinde des erstgenannten Teiles einschraubbar ist. Zwischen diesen Teilen wird ein flacher, zylindrischer Ring aus einem elastischen Material angeordnet, wobei die Dicke dieses Ringes etwa der Dicke der Schleimhautdecke entspricht. Nach der Implantation des unteren Teiles wird anstelle des bereits erwähnten zweiten Teiles zunächst ein Hilfsteil in den unteren Teil eingeschraubt, wobei mittels des genannten elastischen Ringes ein dichter Abschluß zwischen dem Kopf des Hilfsteiles und dem unteren Teil des Pfostens erreicht werden soll. Dieser Hilfsteil ist als eine Schraube ausgebildet und verbleibt solange in dem unteren Teil, bis dieses völlig in den Kieferknochen eingeheilt ist. Danach wird dieser Hilfsteil entfernt und stattdessen der eingangs erwähnte zweite Teil des Pfostens in den unteren Teil eingeschraubt, damit dann endgültig der Zahnersatz mit dem zweiten Teil verschraubt werden kann.

Ferner ist ein Schraubenimplantat in der deutschen Zeitschrift "Die Quintessenz, die Monatszeitschrift für den praktizierenden Zahnarzt, November 1984, Referat Nr. 6678, Seite 1-11" beschrieben. Dieses in der Praxis seit über 10 Jahren gut bewährte Schraubenimplantat enthält einen selbstschneidenden Gewindeteil, der auf kleiner Knochenstrecke eine große Kontaktfläche ergibt und eine optimale primäre Stabilität gewährleistet. Durch die Titanplasmabeschichtung des Gewindeteiles wird eine vergrößerte Kontaktfläche realisiert, woraus Vorteile hinsichtlich der Biokompatibilität erreicht werden. Das Schraubenimplantat kann als einziges Implantat transgingival inseriert werden oder es können auch mehrere Schraubenimplantate mittels eines Steges miteinander verblockt werden, um eine Stegprothese aufzubauen. Hierbei wird auf den konischen Kopf eine Kappe aufgesetzt und mittels einer in das Innengewinde eingreifenden Schraube befestigt. Der Kopf weist in seiner konischen Außenfläche vier durchgehende Längsrillen auf, die zum Ansetzen eines Werkzeuges beim Einschrauben in den Kiefer dienen. Im Hinblick auf die Hygieneanforderungen haben sich derartige durchgehende Rillen als nachteilig erwiesen. Die in das Innengewinde des Schraubenimplantates einzuschraubende Kreuzschlitz-Schraube weist einen flachen Kopf auf, der unter die Oberkante bzw. Endfläche der Kappe versenkt ist. Die Endfläche der Kappe befindet sich auf einem ringförmigen Ansatz, innerhalb welchem der Schraubenkopf angeordnet ist, was zu Schmutzablagerungen führt und woraus sich Nachteile hinsichtlich der Hygienefreundlichkeit ergeben.

Der Erfindung liegt die Aufgabe zu Grunde, das Schraubenimplantat der eingangs genannten Art dahingehend weiterzubilden, daß bei einfacher Herstellung und Handhabung eine optimierte Hygieneverbesserung erreicht wird.

Die Lösung dieser Aufgabe erfolgt gemäß den im Kennzeichen des Patentanspruchs 1 angegebenen Merkmalen.

Das vorgeschlagene Schraubenimplantat zeichnet sich durch eine besonders hygienefreundliche Konstruktion aus. Aufgrund der angegebenen Ausbildung des Schraubenkopfes und dessen Auflage auf der okklusalen Endfläche der Kappe werden Bereiche vermieden, in welche sich Bakterien oder dergleichen einnisten könnten. Der Schraubenkopf ist linsenförmig ausgebildet und gewährleistet eine paßgenaue und hygienefreundliche Befestigung der Kappe. Die Kappe ist erfindungsgemäß ebenso wie der Konische Kopf des Aufbaupfeiles rotationssymmetrisch ausgebildet. Die Kappe besteht zweckmäßig aus Gold bzw. einer entsprechenden Dental-Goldlegierung. Die Auflagefläche des Schraubenkopfes liegt plan auf der Endfläche der Kappe auf und aufgrund der gleichen Außendurchmesser der genannten Flächen wird ein nahtloser Übergang von der Kappe zur Außenfläche des Schraubenkopfes sichergestellt. Die Kappe kann mit gleichbleibender Wandstärke ausgebildet sein und die zweckmäßig abgerundete Außenfläche des Schraubenkopfes kann unmittelbar in die konische Außenfläche der Kappe übergehen. Die zervikale Endfläche der Kappe liegt nicht in einer zur okklusalen Endfläche parallelen Ebene, sondern sie stellt in Richtung zur okklusalen Endfläche eine kontinuierliche Verlängerung einer gebogenen Halsfläche dar. Der zwischen dem Kopf und dem Gewindeteil vorgesehene Hals ist als eine sanduhrartige Einschnürung ausgebildet und enthält die gebogene Fläche. Der Hals mit der gebogenen Fläche sowie die als kontinuierliche Verlängerung anschließende zervikale Endfläche der Kappe liegen nach der Inkorporation des Schraubenimplantats im Bereich der Schleimhaut. Diese Maßnahmen haben sich als optimal zweckmäßig im Hinblick auf die Kronenpaßgenauigkeit und Adaption erwiesen. Nach der Inkorporation des Schraubenimplantates bestehen aufgrund dieser Ausgestaltung beste Voraussetzungen für das dichte Anwachsen (Attachement) der Schleimhaut, da scharfe Kanten in diesem Bereich in zweckmäßiger Weise vermieden werden.

Gemäß einer besonderen Weiterbildung können in der Außenfläche des konischen Kopfes wenigstens eine, zweckmäßig zwei, Längsrillen vorgesehen sein, welche sich von der Spitze des Kopfes nicht über die gesamte Länge erstrecken, sondern vor der zervikalen Endfläche der Kappe enden. Somit wird auch in diesem Bereich ein bakteriendichter Abschluß zwischen der Kappe und dem konischen Kopf sichergestellt, wodurch in zuverlässiger Weise eine entscheidende Hygienevverbesserung erreicht wird. Im Gegensatz zu dem eingangs erwähnten Schraubenimplantat gemäß der deutschen Zeitschrift "Die Quintessenz, Referat Nr. 6678", welches vier symmetrisch über den Umfang des Kopfes verteilte und sich über die gesamte Länge erstreckende Längsrillen, sind nunmehr verkürzte Längsrillen vorhanden, so daß auch insoweit das Risiko einer Ausbildung von infektiösen Herden erheblich reduziert wird.

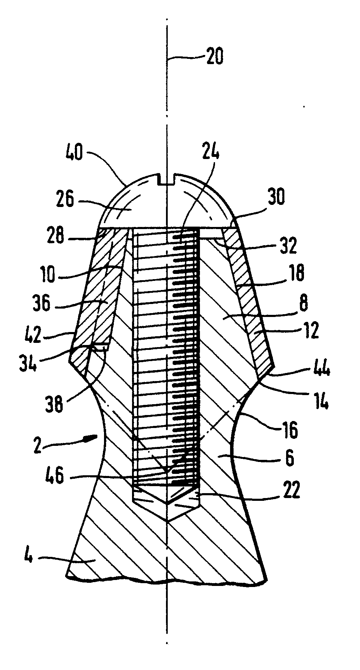

Die Erfindung wird nachfolgend anhand des in der Zeichnung dargestellten Ausführungsbeispieles näher erläutert.

Die Zeichnung zeigt einen Längsschnitt durch das Schraubenimplantat, welches im okklusalen Bereich einen Aufbaupfeiler 2 und ferner einen in den Kieferknochen einzuschraubenden und hier nur verkürzt dargestellten enossalen Gewindeteil 4 aufweist. Der Aufbaupfeiler 2 besteht aus einem Hals 6 und einem konischen Kopf 8. Erfindungsgemäß sind der Kopf 8 und eine Kappe 12 rotationssymmetrisch mit aneinandergepaßten glatten, konischen Außen- bzw. Innenflächen ausgebildet.

Alternativ kann der Kopf in seiner Außenfläche 18 zwei diametral einander gegenüberliegende Längsrillen 10 aufweisen. In der Zeichnung ist nur die eine Längsrille 10 dargestellt, damit im übrigen die Anordnung und Ausbildung der konischen Kappe 12 besser verständlich wird. Die erfindungsgemäß zwei Längsrillen 10 erstrecken sich nicht über die gesamte Länge des Kopfes 8, sondern sie enden noch vor der Endkante 14 bzw. dem Hals 6, welcher nach Art einer sanduhrförmigen Einschnürung eine gebogene Fläche 16 aufweist, welche an der Endkante 14 der konischen Außenfläche 18 des Kopfes 8 endet. Erfindungsgemäß ist die Fläche 16 hochglanzpoliert, wodurch beste Voraussetzungen für das dichte Anwachsen der Schleimhaut erreicht werden.

Der Aufbaupfeiler 2 enthält ein sich in Richtung der Längsachse 20 vom okklusalen Ende sich erstreckendes Innengewinde 22, in welches eine Schraube 24 einschraubbar ist. Es sei festgehalten, daß nach dem Einschrauben des mit einem selbstschneidenden Gewinde versehenen Gewindeteiles 4 in den Kieferknochen die Kappe 12 auf den konischen Kopf 8 aufgesetzt und mittels der Schraube 24 befestigt wird. An der Außenfläche 18 der Kappe 12, die aus Gold oder allgemein aus einer angußfähigen Dentallegierung besteht, können in bekannter Weise Stege angelötet sein. Der Kopf 26 der Schraube 24 weist eine Auflagefläche 28 auf, die auf der okklusalen Endfläche 30 der Kappe 12 fest und bakteriendicht aufliegt. Wesentlich ist insoweit, daß die Spitze 32 des Aufbaupfeilers 2 zur genannten Auflagefläche 28 einen Abstand aufweist, so daß die Kappe 12 mit ihrer konischen Innenfläche dicht an dem der Außenfläche 18 anliegt, die zweckmäßig auf Hochglanz poliert ist, wobei die Auflagefläche 28 auf die genannte Endfläche 30 angepreßt wird. Aus den genannten Gründen ist auch zwischen dem inneren Ende 34 der Längsrille 10 und dem in die Längsrille eingreifenden Teil 36 der Kappe 12 ein Spalt 38 im Rahmen dieser Erfindung vorhanden. Die Längsrille 10 und ebenso der Kappenteil 36 erstrecken sich nur über eine vorgegebenen kleinen Winkelbereich in Umfangsrichtung bezogen auf die Längsachse 20.

Der Schraubenkopf 26 weist eine abgerundete Außenfläche 40 auf, welche im Bereich der Auflagefläche 28 kontinuierlich in die äußere Mantelfläche 42 der Kappe 12 übergeht. Die Auflagefläche 28 weist den gleichen Außendurchmesser auf, wie die okklusale Endfläche 30 der Kappe 12, so daß hinsichtlich Hygiene nachteilige Rillen oder Spalte in diesem Übergangsbereich zuverlässig vermieden werden. Die dem Gewindeteil 4 zugewandte andere Endfläche 44 der Kappe 12 liegt nicht parallel zur okklusalen Endfläche 30, sondern ist ähnlich einem Kegel in der Weise geneigt, daß die Kegelspitze 46 dem Gewindeteil 4 zugewandt ist. Anstelle einer konischen Ausgestaltung kann die andere Endfläche 44 auch abgerundet ausgebildet sein. Wesentlich ist insoweit, daß die andere Endfläche 44 eine kontinuierliche Verlängerung der Fläche 16 des Halses 6 darstellt, um Kanten, Rillen oder dergleichen sowohl im Übergang zur Halsfläche 16 wie zur Mantelfläche 42 zu vermeiden. Diese Ausbildung hat sich besonders zweckmäßig für die Schleimhautanlage erwiesen.

Bezugszeichen

| 2 | Aufbaupfeiler |
|---|---|
| 4 | Gewindeteil |
| 6 | Hals |
| 8 | Kopf |
| 10 | Längsrille |
| 12 | Kappe |
| 14 | Endkante |
| 16 | Fläche von 6 |
| 18 | Außenfläche von 8 |
| 20 | Längsachse |
| 22 | Innengewinde |
| 24 | Schraube |
| 26 | Schraubenkopf |
| 28 | Auflagefläche von 26 |
| 30 | Endfläche von 12 |
| 32 | Spitze |
| 34 | Inneres Ende |
| 36 | Teil von 12 |
| 38 | Spalt |
| 40 | Außenfläche |
| 42 | Mantelfläche |
| 44 | Andere Endfläche von 12 |
| 46 | Kegelspitze |

**Patentansprüche**

1. Schraubenimplantat zur Befestigung eines Zahnersatzes, mit einem in einen Kiefer einschraubbaren Gewindeteil (4) und mit einem okklusalen Aufbaupfeiler (2), der einen konischen Kopf (8) und ein Innengewinde (22) für eine okklusale Schraube (24) aufweist, mittels welcher eine Kappe (12) auf der konischen Außenfläche (18) des Kopfes (8) befestigbar ist, wobei ein Schraubenkopf (26) der Schraube (24) mit einer Auflagefläche auf einer okklusalen Endfläche (30) der Kappe (12) aufliegt und der Außendurchmesser des Schraubenkopfes (26) im Bereich der Auflagefläche (28) gleichgroß ist wie der Außendurchmesser der okklusalen Endfläche (30) der Kappe (12) und wobei ferner die Spitze (32) des Kopfes (8) des Aufbaupfeilers (2) zur Auflagefläche (28) einen Abstand aufweist, dadurch gekennzeichnet, daß zwischen dem Gewindeteil (4) und dem Kopf (8) ein als eine sanduhrartige Einschnürung ausgebildeter Hals (6) vorgesehen ist, welcher eine gebogene Fläche (16) aufweist, und daß die zervikale Endfläche (44) der Kappe (12) in Richtung zur okklusalen Endfläche (30) eine kontinuierliche Verlängerung der gebogenen Fläche (16) des Halses (6) bildet.

2. Schraubenimplantat nach Anspruch 1, dadurch gekennzeichnet, daß die Außenfläche (40) des Schraubenkopfes (26) abgerundet ausgebildet ist, wobei die Außenfläche (40) des bevorzugt linsenkopfartigen Schraubenkopfes (46) im wesentlichen kontinuierlich an die Mantelfläche (42) der Kappe (12) anschließt.

3. Schraubenimplantat nach Anspruch 1 oder 2, dadurch gekennzeichnet, daß von der Spitze (32) des Kopfes (8) wenigstens eine, zweckmäßig zwei, Längsrillen (10) ausgehen, die sich nur über einen Teil der konischen Außenfläche (18) des Kopfes (8) erstrecken und in einem Abstand vor der zervikalen Endkante (14) des Kopfes (8) enden.

4. Schraubenimplantat, insbesondere nach einem der Ansprüche 1 bis 3, dadurch gekennzeichnet, daß die zervikale Endfläche (44) der Kappe (12) im wesentlichen kegelförmig ausgebildet ist, wobei die imaginäre Kegelspitze (46) dem Gewindeteil (4) zugewandt ist.

5. Schraubenimplantat nach einem der Ansprüche 1 bis 4, dadurch gekennzeichnet, daß die in einer radialen Ebene befindliche plane Auflagefläche (28) sich in radialer Richtung nach außen bis zur Mantelfläche (42) der Kappe (12) erstreckt.

6. Schraubenimplantat nach einem der Ansprüche 3 bis 5, dadurch gekennzeichnet, daß zwischen dem in die Längsrille (10) eingreifenden Kappenteil (36) und dem Zervikalen Ende (34) der Längsrille (10) ein Spalt (38) vorhanden ist, wobei die Längsrille (10) in einem Abstand vor der Endkante (14) des Kopfes (8) endet.

7. Schraubenimplantat nach einem der Ansprüche 1 bis 6, dadurch gekennzeichnet, daß die Endfläche (30) der Kappe (12) in einer radialen Ebene angeordnet ist und als eine Ringfläche ausgebildet ist, welche sich radial nach außen bis zur Mantelfläche (42) der Kappe (12) erstreckt.

8. Schraubenimplantat nach einem der Ansprüche 1 bis 7, dadurch gekennzeichnet, daß zumindest die Außenfläche (16) vom Hals (6), zweckmäßig auch die Außenfläche (18) des Kopfes (8), hochglanzpoliert ausgebildet sind.

## Claims

1. A screw implant for securing a dental prosthesis, comprising a threaded part (4) which can be screwed into a jaw, and an occlusal structural support (2) which has a conical head (8) and an internal thread (22) for an occlusal screw (24) by means of which a cap (12) can be secured to the conical outer face (18) of the head (8), wherein the screw head (26) of the screw (24) bears via a bearing surface against the occlusal end face (30) of the cap (12) and the outer diameter of the screw head (26) adjacent the bearing surface (28) is substantially the same size as the outer diameter of the occlusal end face (30) of the cap (12) and furthermore the top (32) of the head (8) of the structural support is spaced from the bearing surface (28), characterised in that between the threaded part (4) and the head (8) there is a neck (6) shaped like the constriction of an hourglass having a curved surface (16) and that the end face (44) of the cap (12) nearest the neck forms a continuous extension of the curved surface (16) of the neck (6) in the direction towards the occlusal end face (30).

2. A screw implant according to claim 1, characterised in that the outer surface (40) of the screw head (26) has a rounded configuration, the outer surface (40) of the preferably fillister-headed screw head (46) merging substantially continuously with the outer surface (42) of the cap (12).

3. A screw implant according to claim 1 or 2, characterised in that at least one and preferably two longitudinal grooves (10) start at the top (32) of the head (8) and extend over only part of the conical outer surface (18) of the head (8) and end short of the cervical end edge (14) of the head (8).

4. A screw implant, more particularly according to claims 1 to 3, characterised in that the cervical end face (44) of the cap (12) is substantially conical, the imaginary apex (46) of the cone facing the threaded part (4).

5. A screw implant according to one of claims 1 to 4, characterised in that the planar bearing surface (28) situated in a radial plane extends radially outwards to the outer surface (42) of the cap (12).

6. A screw implant according to one of claims 3 to 5, characterised in that, between the part (36) of the cap engaging in the longitudinal groove (10) and the cervical end (34) of the longitudinal groove (10), there is a gap (38), the longitudinal groove (10) ending short of the end edge (14) of the head (8).

7. A screw implant according to one of claims 1 to 6, characterised in that the end face (30) of the cap (12) is arranged in a radial plane and is formed as an annular surface which extends radially outwards to the outer surface (42) of the cap (12).

8. A screw implant according to one of claims 1 to 7, characterised in that at least the outer face (16) of the neck (6) and preferably also the outer face (18) of the head (8) are highly polished.

## Revendications

1. Implant vissé destiné à la fixation d'une prothèse dentaire, comprenant une partie filetée (4) qui se visse dans le maxillaire et un pilier de superstructure occlusale (2) qui présente une tête conique (8) et un filetage intérieur (22) destiné à recevoir une vis occlusale (24) à l'aide de laquelle une coiffe (12) peut être fixée sur la surface extérieure conique (18) de la tête (8), la tête (26) de la vis (24) étant appliquée par une surface d'appui sur une surface terminale occlusale (30) de la coiffe (12), et le diamètre extérieur de la tête (26) de la vis, dans la région de la surface d'appui (28), est égal au diamètre extérieur de la surface terminale occlusale (30) de la coiffe (12), la pointe (32) de la tête (8) du pilier se trouvant à un certain écartement de la surface d'appui (28), caractérisé en ce qu'il est prévu, entre la partie filetée (4) et la tête (8), un col (56) possédant la forme d'un étranglement de sablier qui présente une surface courbe (16),

et en ce que la surface terminale cervicale (44) de la coiffe (12) forme, en direction de la surface terminale occlusale (30), un prolongement continu de la surface courbe (16) du col (6).

2. Implant vissé selon la revendication 1, caractérisé en ce que la surface intérieure (40) de la tête (26) de la vis est de forme arrondie, la surface extérieure (40) de la tête (46) de la vis, qui est de préférence d'une forme convexe bombée, se raccordant sensiblement sans rupture de ligne à la surface latérale (42) de la coiffe (12).

3. Implant vissé selon la revendication 1 ou 2, caractérisé en ce qu'un sillon longitudinal (10), ou avantageusement deux sillons longitudinaux (10), qui part ou qui partent de la pointe (32) de la tête (8) ne s'étend(ent) que sur une partie de la surface extérieure conique (18) de la tête (8), et se termine(nt) à une certaine distance avant d'atteindre le bord d'extrémité cervicale (14) de la tête (8).

4. Implant vissé, notamment selon une des revendications 1 à 3, caractérisé en ce que la surface d'extrémité cervicale (44) de la coiffe (12) est de forme sensiblement conique, la pointe imaginaire (46) du cône étant dirigée vers la partie filetée (4).

5. Implant vissé selon une des revendications 1 à 4, caractérisé en ce que la surface de portée plane (28), qui se trouve dans un plan radial, s'étend vers l'extérieur dans la direction radiale jusqu'à la surface latérale (42) de la coiffe (12).

6. Implant vissé selon une des revendications 3 à 5, caractérisé en ce qu'il existe une fente (38) entre la partie (36) de la coiffe qui est engagée dans le sillon longitudinal (10), et l'extrémité cervicale (34) du sillon longitudinal (10), le sillon longitudinal (10) se terminant à une certaine distance du bord terminal (14) de la tête (8).

7. Implant vissé selon une des revendications 1 à 6, caractérisé en ce que la surface terminale (30) de la coiffe (12) est disposée dans un plan radial et forme une surface annulaire qui s'étend radialement vers l'extérieur jusqu'à la surface latérale (42) de la coiffe (12).

8. Implant vissé selon une des revendications 1 à 7, caractérisé en ce qu'au moins la surface extérieure (16) du col (6), et avantageusement également la surface externe (18) de la tête (8), possède(nt) un poli spéculaire.